# EUROPEAN PATENT SPECIFICATION

(11) **EP 0 624 791 B1**
(45) Date of publication and mention of the grant of the patent: **08.07.1998**
(21) Application number: 94201060.4
(22) Date of filing: 18.04.1994
(51) Int. Cl.: G01N 27/407, G01N 27/12

(54) **Exhaust sensor with tubular shell**
Abgassensor mit rohrförmiger Hülse
Capteur de gaz d'échappement avec enveloppe tubulaire

(30) Priority: 11.05.1993 US 59398
(43) Date of publication of application: 17.11.1994
(73) Proprietor: GENERAL MOTORS CORPORATION, Detroit Michigan 48202 (US)
(72) Inventor: McClanahan, Mark Ray, Clio, Michigan 48420 (US); Dinger, Bruce Richard, Davison, Michigan 48423 (US); Duce, Richard William, Flushing, Michigan 48433 (US)
(74) Representative: Denton, Michael John

(56) References cited:
- EP-A- 0 364 315
- EP-A- 0 398 625
- DE-A- 2 855 012
- US-A- 3 909 385
- PATENT ABSTRACTS OF JAPAN vol. 014, no. 321 (P-1074) 10 July 1990 & JP-A-02 105 050 (FUJIKURA LTD) 17 April 1990

## Description

This invention relates to gas sensors, and more particularly to automotive exhaust oxygen sensors, as specified in the preamble of claim 1 and as disclosed for example in EP-A- 398 625.

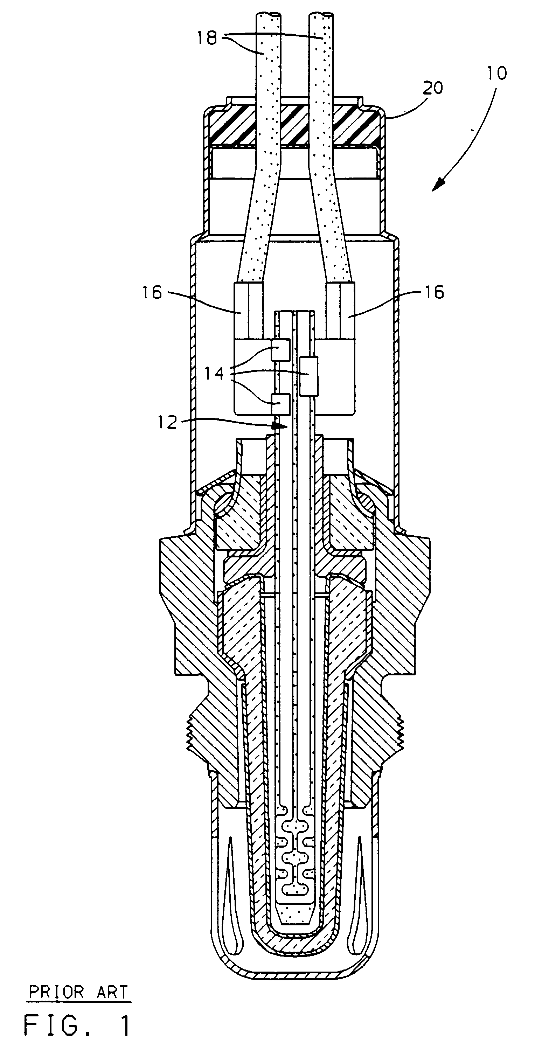

Automotive exhaust oxygen sensors have elements such as electrodes or heaters, which require a supply of electricity for the operation thereof. Figure 1 of the accompanying drawings illustrates a prior oxygen sensor 10 in which electrical power is provided to a sensing element or a heater 12 through permanent crimped contacts. The contacts have a terminal pad 14 permanently connected, e.g., soldered, to the body of the sensor or to an associated terminal pad on the heater. The contact at the other end includes a crimped portion 16 which surrounds and contacts a wire 18 supplying electrical power to the component. The wire 18 then extends through a housing body 20 and is connected to an external power source. Assembling such a sensor requires the sensor body to be permanently attached to a link of cable with an interface connector. That assembly process is extremely difficult to accomplish and this is undesirable. Many added steps and special tools are required to connect a sensor with an attached harness to a manifold boss. The attached harness assemblies can tangle and nest together making it difficult to pull out one sensor from a bulk load. Two hands are required to screw the sensor into a manifold to prevent the wires from tangling. A special tool designed to fit around the harness assembly and wires is required to tighten the sensor into a boss on the manifold. Furthermore, the wires must be secured to the engine prior to installation of the sensor into the vehicle so that damage to the wires and the vehicle interface connector is prevented.

The present invention seeks to overcome the deficiencies of these prior oxygen sensors.

A gas sensor according to the present invention is characterised by the features specified in the characterising portion of claim 1.

The invention includes an automobile exhaust oxygen sensor and a method of assembling the same, said sensor including a single piece tubular shell having a crimped lip near a lower portion thereof. A nut is slipped over the tubular shell for engagement with the crimped lip. The nut includes a threaded portion corresponding to a threaded boss in an exhaust system. The crimped lip on the shell prevents the oxygen sensor shell from being pushed in or out of the boss. The nut co-operates with a seat formed in the boss to prevent the oxygen sensor shell from being pushed too far into the boss. The nut is threaded into the boss to hold the sensor in place without the need to rotate the shell. This eliminates the need for special tooling to assemble and install the sensor.

The sensor may include a barbed ring slipped over the upper portion of the tubular shell, which ring includes a barb for engagement with the shell. A retaining cap is slipped over the upper portion of the shell and the barbed ring. The retaining cap includes an inwardly-biased finger for engaging the barbed ring so that the upper portion of the sensor is sealed. A Teflon seal may be provided within the retainer and may have holes formed therein to accommodate electrical cables associated with electrical terminals for either the oxygen-sensing element or heater.

These and other objects, features and advantages and embodiments of the present invention will be apparent from the following detailed description, appended claims and accompanying drawings, in which:
Figure 1 illustrates a prior exhaust oxygen sensor;
Figure 2 shows a gas sensor, which does not lie within the scope of the claims and is described for the purpose of illustration only ;
Figure 3 is a sectional exploded view of the gas sensor of Figure 2, taken along line 3-3 of Figure 2;
Figure 4 is a sectional view of the gas sensor of Figure 2, taken along line 4-4 of Figure 3;
Figure 5 is an exploded view of a flat plate oxygen sensor usable in the present invention;
Figure 6 is a sectional view of another gas sensor which does not lie within the scope of the claims and is described for the purpose of illustration only ; and
Figure 7 is a sectional view of an embodiment of a gas sensor with a slidable hex nut according to the present invention.

Exhaust oxygen sensors are used in automobiles to determine the concentration of oxygen present in the exhaust gas of an internal combustion engine. By measuring the concentration of the oxygen content in the exhaust gas, various engine operating parameters can be adjusted to operate the engine for improved performance and limited environmental emissions. In general, exhaust oxygen sensors include a pair of electrodes positioned on opposite sides of an oxygen-permeable material such as an electrolyte body. As electricity is supplied to the electrodes, gas migrates through the oxygen-permeable material. The rate of oxygen transfer through the permeable material is measured to determine the concentration of the oxygen in the exhaust gas. Often a heater is provided so that both reference oxygen and exhaust oxygen are maintained at a predetermined temperature. The electrode and the heater require electrical power to operate. The prior exhaust oxygen sensors included terminals permanently soldered to the sensor body or to a terminal pad on a heater as shown in Figure 1. Another portion of the terminal was crimped around a wire which was connected to an external power source. The disadvantages of such systems are outlined above.

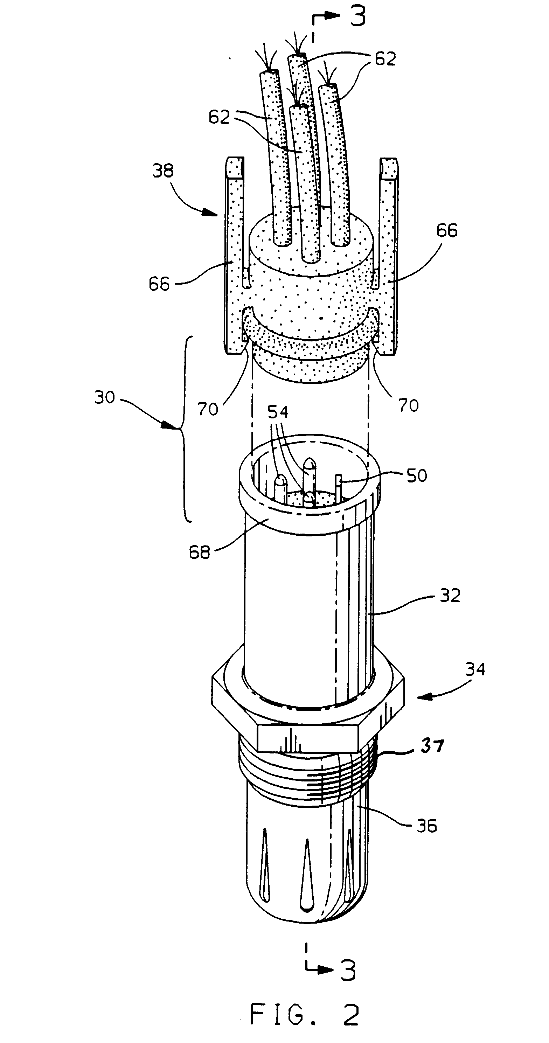

Figures 2, 3 and 4 illustrate an exhaust oxygen sensor 30 which does not lie within the scope of the claims. The oxygen sensor includes an upper shield 32, a body 34, a lower shield 36 and a cap 38 all connected together to form an oxygen sensor housing. The upper and lower shields 32, 36 are made from a tubular-shaped stainless steel material about 0.5 mm thick. The body is made from a stainless steel material about 2.5 mm thick at the smallest cross-section. The body has a threaded portion 37 on its outer surface near a lower end thereof, which threaded portion 37 may be threaded into a manifold boss. A heater element 40 and an oxygen-sensing element 42 are received in the housing and held in position by a cylindrical ceramic connector 44 and upper and lower glass seals 46, 48 which extend, respectively, from the shell to terminals 50 and to the flat plate oxygen-sensing element 42. The terminals 50 are provided for separate connections to first and second leads of the heater element 40; to the electrode of the oxygen-sensing element 42; and to a ground connection. The terminals each include a terminal pad 52 welded either to the heater element 40 or to the oxygen-sensing element 42. Male prongs 54 extend upwardly from each terminal pad 52. The male prongs 54 may be held in place by upper glass seal 46 or by a spacer-orienting alumina material (not shown), which acts as a terminal holder. A suitable glass seal for the holder includes fused alumina borosilicate glass. A second terminal is provided in the cap 38 with a corresponding female connector for each male prong. Each female connector includes a metal portion 56 defining a cavity 58 for receiving at least a portion of a respective male prong 54. Each female connector also includes a crimped portion 60 which is crimped around a wire 62 which extends out of the oxygen sensor housing to an external power source. The female connectors may be held in position by a seal plug 64 which is inserted into the oxygen sensor cap 38. The male prongs 54 and the female connectors may be made of any electrically-conductive material, for example, gold-plated stainless steel.

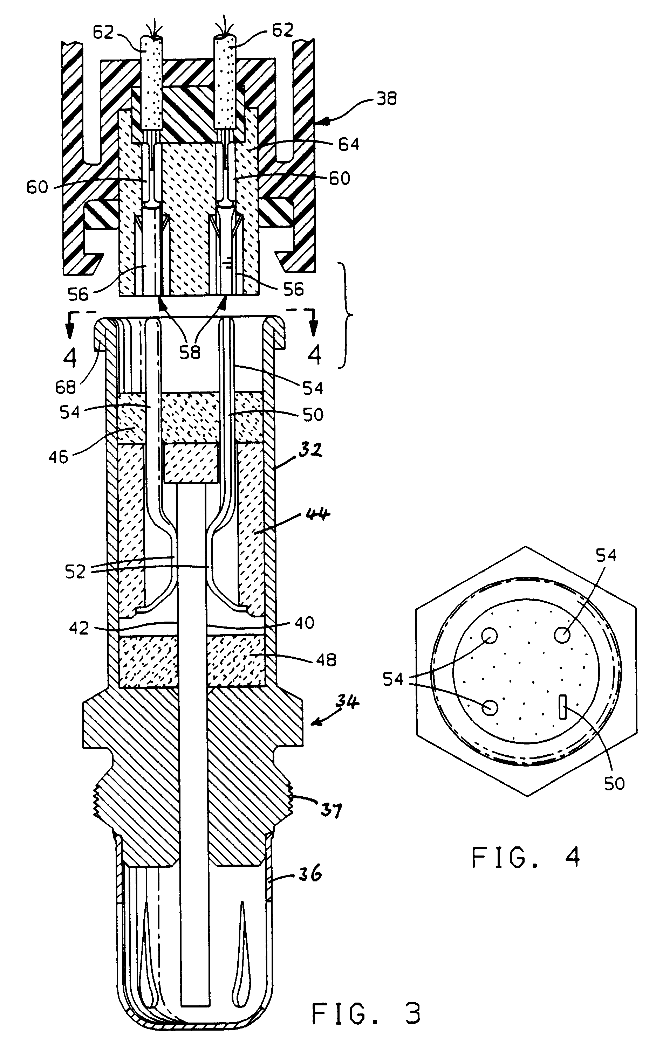

The orientation of the male prong and the female receptacle for each electrical terminal may be varied, and each terminal may have at least one male prong and female receptacle. The male prongs and female receptacles may be arranged on each electrical terminal so as to ensure that the terminals of the heater element and the oxygen-sensing element are always connected and assembled properly. As shown in Figure 4, the male prongs may have a variety of shapes including a substantially cylindrical or substantially rectangular shape in cross-section. The corresponding female receptacle is designed to define a cavity for receiving the particular shape of the corresponding male prong on the opposite terminal. Each male prong and the respective female receptacle are constructed and arranged so that one of the first and second electrical terminals is removable with respect to the other terminal.

As shown in Figures 2 and 3, the cap 38 includes a first resilient lock 66 for releasably locking the cap 38 onto a ridge 68 formed on the upper shield portion 32 of the sensor. The first resilient lock 66 includes an inwardly-extending lip 70 which forms a resilient rim at a lower edge of the cap 38. The cap 38 is pushed onto the upper shield 32 so that the first terminals in the oxygen sensor body and the second terminals in the cap make electrical connection with one another, with the male prongs being received in respective female receptacles. The first resilient lock 66 of the cap 38 is pressure-fitted around the ridge 68 of the upper shield 32 to close the housing of the oxygen sensor. Thereafter, the cap 38 may be permanently secured to the upper shield 32 by welding, cement or other suitable means.

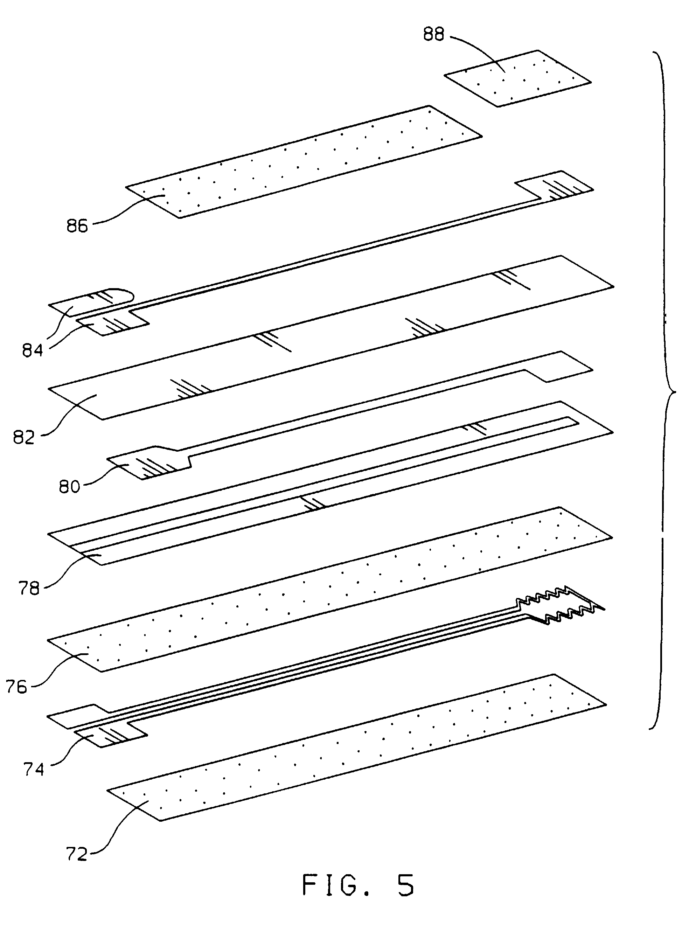

A variety of flat plate oxygen sensors are known to those skilled in the art which are suitable for use in the present invention. Figure 5 illustrates such a flat plate oxygen sensor which includes a series of laminated structures overlaying each other including, for example, a heater protective coat 72, a platinum heater 74, a heater insulating layer 76, a heater substrate 78, a platinum inner electrode 80, a zirconium electrode substrate (electrolyte body) 82, a platinum outer electrode 84, an electrode lead protective coat 86, and an electrode protective coat 88. The male prongs and female prongs described herein are arranged to make electrical connection to the platinum heater, and to the inner and outer platinum electrodes.

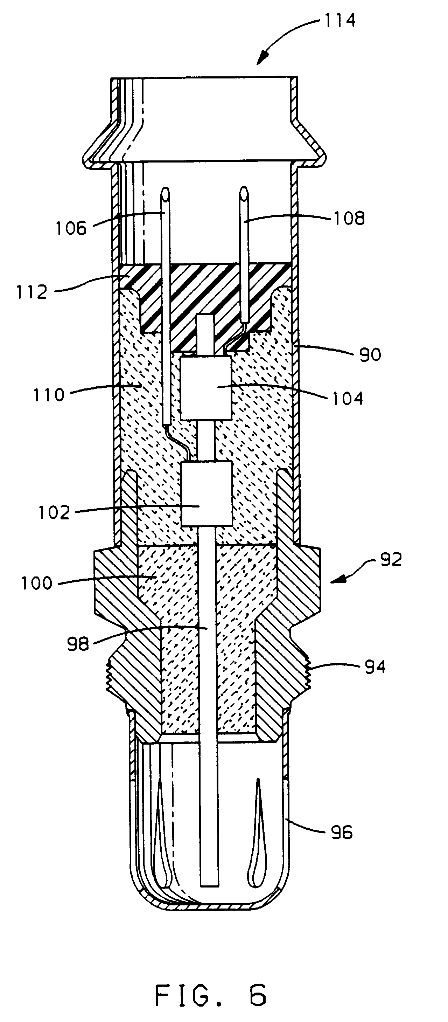

Figure 6 illustrates like wise an oxygen sensor which does not lie within the scope of the claims. This sensor includes an upper tubularly-shaped shield 90, a hollow cylindrical metal body 92 having a threaded portion 94 near a lower end thereof, and a closed-end, tubularly-shaped lower shield 96, connected together to form an oxygen sensor housing. A flat plate oxygen sensor 98, comprising an oxygen-sensing element with a heater, is received in the housing and is held in position by cement 100 extending from an internal wall of the metal body 92 to the flat plate sensor 98. The flat plate oxygen-sensing element has electrical terminals 102, 104 connected thereto near an upper end thereof and male prongs 106, 108 extend upwardly therefrom. A glass seal 110 extends from an internal wall of the upper shield 90 to surround an upper portion of the flat plate oxygen-sensing element and the electrical terminals 102, 104. The male prongs 106, 108 are held in position by a spacer orienting alumina ceramic member 112 extending from the internal wall of the upper shield 90 to the prongs 106, 108. A space 114 is provided in an upper portion of the upper shield 90 for receiving thereon a rubber stopper (not shown) carrying an electrical terminal having female receptacles for receiving the male prongs 106, 108. Wires connect the female receptacle of the electrical terminal to an external power source.

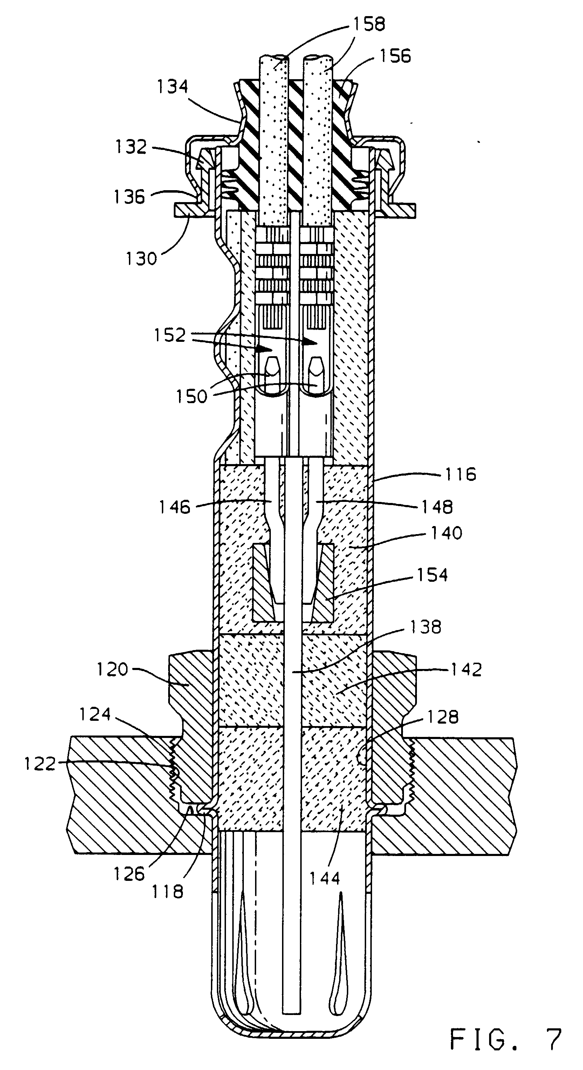

Only Figure 7 illustrates an embodiment of the present invention. This embodiment includes a single-piece tubular shell 116 made out of stainless steel material about 0.5 mm thick. The shell 116 has a crimped lip 118 formed near a lower portion of the shell. A ring-shaped hex nut 120 is slipped over the tubular shell 116 for engagement with the crimped lip 118. The hex nut 120 includes a threaded portion 122 engageable with a threaded boss 124 in the exhaust system. The crimped lip 118 on the shell prevents the oxygen sensor from being pushed in or pulled out of the boss 124. The hex nut 120 co-operates with a seat 126 formed in the boss 124 to prevent the oxygen sensor from being pushed too far into the boss. The nut 120 is threaded into the boss 124 to hold the sensor in place without the need to rotate the shell. This eliminates the need for special tools to assemble and install the sensor in the exhaust system.

A barbed ring 130 is slipped over the upper portion of the tubular shell 116 and includes a barb 132 for engaging the shell. A retainer 134, made out of stainless steel material about 0.5 mm thick, is slipped over the upper portion of the shell 116 and the barbed ring 130. The retainer 134 has inwardly-biased legs 136 for engaging the barbed ring 130 and sealing the upper portion of the oxygen sensor. A flat plate oxygen sensor 138 is housed in the shell 116 and is held in position by a first cement composition 140 surrounding an upper portion of the flat plate oxygen sensor 138; a glass seal 142 surrounding the middle portion of the oxygen sensor 138; and a second cement composition 144 surrounding a lower portion of the flat plate oxygen sensor 138. A suitable cement composition includes calcia alumina (calcium aluminate, 3 CaO Al₂O₃) and is available from Aremco Company, USA under the trade name Ceramcast 575™. A suitable glass seal composition includes glass frit and is available from Ferro Company, USA under the trade name 2876™. The first and second cement compositions 140, 144 firmly hold the flat plate oxygen sensor 138 in the shell 116 and the glass seal 142 allows for thermal expansion of the flat plate oxygen sensor 138.

First and second terminals 146, 148 are used to make electrical connection to the heater and flat plate electrodes of the oxygen sensor 138 by way of male prongs 150 and female receptacles 152 as described above. Two electrical connections are made to the heater portion of the flat plate oxygen sensor as described above. One electrical connection is made to the inner electrode of the flat plate sensor. A fourth terminal is connected to the outer electrode to provide an isolated ground connection back to an electronic control module. A wedged ring 154 may be positioned around the electrical connections to the flat plate oxygen sensor 138 to protect those connections from the cement composition 140. A Teflon^{(RTM)} seal 156 is provided within the retainer 134 and has holes formed therein to accommodate electrical cables 158 associated with the electrical connector female receptacles 152. The retainer 134, the barbed ring 130 and the Teflon^{(RTM)} seal 156 make the oxygen sensor 138 waterproof.

## Claims

1. A gas sensor comprising: a tubular-shaped shell (116) and a gas-sensing element (138) carried in the shell(116); characterised in that the tubular-shaped shell (116) has a crimped lip (118) formed near a lower portion of the shell; and the sensor includes a nut (120) slidably received over the tubular-shaped shell (116) for engagement with the crimped lip (118); said nut (120) having a threaded portion for engagement with a threaded boss (124).

2. An exhaust gas sensor according to claim 1, in which said gas-sensing element (138) comprises a flat plate gas sensor which includes a heating element and which is held in position by a first cement composition (140) comprising calcium aluminate surrounding an upper portion of the flat plate sensor and extending to the shell (116), a glass seal (142) surrounding a middle portion of the flat plate sensor, and a second cement composition (144) comprising calcium aluminate surrounding a lower portion of the flat plate sensor; so that the first and second cement compositions (140,144) firmly hold the flat plate sensor in position in the shell and the glass seal (142) allows for thermal expansion of the flat plate sensor.

3. A gas sensor according to claim 1 or 2, comprising an automotive exhaust oxygen sensor in which there is a barbed ring (130) slipped over the upper portion of the tubular-shaped shell (116) which includes a barb (132) for engagement with the shell (116); and a retaining cap (134) is slipped over the upper portion of the shell (116) and the barbed ring (130), and includes at least one inwardly-biased leg (136) engaging the barbed ring (130) so that the upper portion of the oxygen sensor is sealed.

4. A gas sensor according to any one of the preceding claims, in which the sensor includes first and second electrical terminals (146,148,152) carried in said shell (116), said first electrical terminals (146,148) being secured to said gas-sensing element (138), and said second electrical terminals (152) being connected to an external power source, one of said electrical terminals having at least one male prong (150) and the other electrical terminal having a corresponding female receptacle (152), and said first and second electrical terminals (146,148,152) being constructed and arranged to be selectively removable with respect to each other.

## Patentansprüche

1. Gassensor, der einen rohrförmigen Mantel (116) und ein Gaswahrnehmungselement (138) umfaßt, das in dem Mantel (116) getragen ist, dadurch gekennzeichnet, daß der rohrförmige Mantel (116) eine gecrimpte Lippe (118) aufweist, die nahe bei einem unteren Teil des Mantels gebildet ist, und daß der Sensor eine Mutter (120) umfaßt, die verschiebbar über dem rohrförmigen Mantel (116) zum Eingriff mit der gecrimpten Lippe (118) aufgenommen ist, wobei die Mutter (120) einen Gewindeteil zum Eingriff mit einem Gewindeauge (124) aufweist.

2. Abgassensor nach Anspruch 1, bei dem das Gaswahrnehmungselement (138) umfaßt: einen als flache Platte ausgebildeten Gassensor, der ein Heizelement umfaßt und der durch eine erste Zementzusammensetzung (140) an seiner Stelle gehalten ist, die ein Kalziumaluminat umfaßt, das einen oberen Teil des als flache Platte ausgebildeten Sensors umgibt und sich zu dem Mantel (116) erstreckt, eine Glasdichtung (142), die einen mittleren Teil des als flache Platte ausgebildeten Sensors umgibt, und eine zweite Zementzusammensetzung (144), die Kalziumaluminat umfaßt, das einen unteren Teil des als flache Platte ausgebildeten Sensors umgibt, so daß die ersten und zweiten Zementzusammensetzungen (140, 144) den als flache Platte ausgebildeten Sensor fest in seiner Position in dem Mantel halten und die Glasdichtung (142) eine thermische Ausdehnung des als flache Platte ausgebildeten Sensors berücksichtigt.

3. Gassensor nach Anspruch 1 oder 2, der einen Autoabgassauerstoffsensor umfaßt, bei dem es einen mit einem Widerhaken versehenen Ring (130) gibt, der über den oberen Teil des rohrförmigen Mantels (116) geschoben ist, welcher einen Widerhaken (132) zum Eingriff mit dem Mantel (116) umfaßt, und bei dem ein Haltedeckel (134) über den oberen Teil des Mantels (116) und den mit einem Widerhaken versehenen Ring (130) geschoben ist und mindestens ein nach innen vorgespanntes Bein (136) umfaßt, das mit dem mit einem Widerhaken versehenen Ring (130) in Eingriff steht, so daß der obere Teil des Sauerstoffsensors abgedichtet ist.

4. Gassensor nach einem der vorhergehenden Ansprüche, bei dem der Sensor erste und zweite elektrische Klemmen (146, 148, 152) umfaßt, die in dem Mantel (116) getragen sind, wobei die ersten elektrischen Klemmen (146, 148) an dem Gaswahrnehmungselement (138) befestigt sind und die zweiten elektrischen Klemmen (152) mit einer äußeren Energiequelle verbunden sind, eine der elektrischen Klemmen mindestens eine Steckerzinke (150) aufweist und die andere elektrische Klemme eine entsprechende Buchsenaufnahme (152) aufweist und die ersten und zweiten elektrischen Klemmen (146, 148, 152) so aufgebaut und angeordnet sind, daß sie selektiv in bezug zueinander entfernbar sind.

## Revendications

1. Capteur d'oxygène comprenant : une enveloppe (116) de forme tubulaire et un élément sensible au gaz (138) monté à l'intérieur de l'enveloppe (116), caractérisé en ce que l'enveloppe de forme tubulaire (116) possède une lèvre sertie (118) formée à proximité d'une portion inférieure de l'enveloppe ; et le capteur comprend un écrou (120) glissé sur l'enveloppe de forme tubulaire (116) pour coopérer avec la lèvre sertie (118), ledit écrou (120) ayant une portion filetée destinée à coopérer avec un bossage fileté (124).

2. Capteur de gaz d'échappement selon la revendication 1, dans lequel ledit élément sensible au gaz (138) comprend un capteur de gaz à plaque plane qui comprend lui-même un élément chauffant et qui est tenu en position par une première composition de ciment (140) comprenant de l'aluminate de calcium qui entoure une portion supérieure du capteur à plaque plane et se prolonge jusqu'à l'enveloppe (116), un joint en verre (142) entourant une portion centrale du capteur à plaque plane, et une deuxième composition de ciment (144) comprenant de l'aluminate de calcium qui entoure une portion inférieure du capteur à plaque plane ; de sorte que les première et deuxième compositions de ciment (140, 144) maintiennent fermement le capteur à plaque plane en position dans l'enveloppe et que le joint en verre (142) admet la dilatation thermique du capteur à plaque plane.

3. Capteur de gaz selon la revendication 1 ou 2, comprenant un capteur d'oxygène de gaz d'échappement d'automobile, dans lequel il y a une bague à barbe (130) glissée sur la portion supérieure de l'enveloppe (116) de forme tubulaire, qui comprend une barbe (132) destinée à coopérer avec l'enveloppe (116) ; un capuchon de retenue (134) est glissé sur la portion supérieure de l'enveloppe (116) et sur la bague à barbe (130), et comprend au moins une branche (136) sollicitée vers l'intérieur, qui coopère avec la bague à barbe (130), de sorte que la portion supérieure du capteur d'oxygène est hermétiquement fermée.

4. Capteur de gaz selon une quelconque des revendications précédentes, dans lequel le capteur comprend des premières et deuxièmes bornes électriques (146, 148, 15Z) montées à l'intérieur de ladite enveloppe (116), lesdites premières bornes électriques (146, 148) étant fixées audit élément (138) sensible au gaz, et lesdites deuxièmes bornes électriques (152) étant connectées à une source d'énergie extérieure, l'une desdites bornes électriques ayant au moins une broche mâle (150) et l'autre borne électrique ayant un réceptacle femelle (152) correspondant, et lesdites premières et deuxièmes bornes électriques (146, 148, 152) étant construites et agencées pour pouvoir être sélectivement séparées l'une de l'autre.
